# FASCICULE DE BREVET EUROPEEN

(11) **EP 3 131 763 B1**
(45) Date de publication et mention de la délivrance du brevet: **02.09.2020**
(21) Numéro de dépôt: 15722089.8
(22) Date de dépôt: 17.04.2015
(51) Int. Cl.: B60C 11/00, B60C 11/03

(54) **BANDE DE ROULEMENT DE PNEUMATIQUE POUR VEHICULE A USAGE AGRICOLE**
REIFENLAUFFLÄCHE FÜR EIN LANDWIRTSCHAFTLICHES FAHRZEUG
TYRE TREAD FOR AN AGRICULTURAL VEHICLE

(30) Priorité: 18.04.2014 FR 1453524
(43) Date de publication de la demande: 22.02.2017
(73) Titulaire: Compagnie Générale des Etablissements Michelin, 63000 Clermont-Ferrand (FR)
(72) Inventeur: VERVAET, Patrick, F-63040 Clermont Ferrand Cedex 9 (FR); REY, Daniel, F-63040 Clermont Ferrand Cedex 9 (FR); LALANCE, Gautier, F-63040 Clermont Ferrand Cedex 9 (FR); MANGERET, Jean-Luc, F-63040 Clermont Ferrand Cedex 9 (FR)
(74) Mandataire: Millanvois, Patrick Jacques Jean
(86) Numéro de dépôt international: PCT/EP2015/058343
(87) Numéro de publication internationale: WO 2015/158871

(56) Documents cités:
- WO-A1-2011/064056
- JP-A- 2004 182 043
- JP-A- 2006 327 454
- JP-A- 2008 114 756

## Description

La présente invention concerne un pneumatique pour véhicule à usage agricole, tel qu'un tracteur agricole ou un véhicule agro-industriel.

Elle concerne plus particulièrement la bande de roulement d'un tel pneumatique, destinée à entrer à contact avec un sol par l'intermédiaire d'une surface de roulement.

Dans ce qui suit, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique pour tracteur agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour tracteur agricole, et en particulier sa bande de roulement, doit présenter un compromis de performances entre la traction en champ, la résistance aux arrachements, la résistance à l'usure sur route, la résistance au roulement, le confort vibratoire sur route.

La bande de roulement d'un pneumatique pour tracteur agricole comprend généralement une pluralité de barrettes. Les barrettes sont des éléments en relief par rapport à une surface de révolution autour de l'axe de rotation du pneumatique, appelée surface de fond.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans l'aire de contact du pneumatique, est appelée face de contact de la barrette.

Selon la direction axiale, une barrette s'étend vers l'intérieur, en direction du plan équatorial du pneumatique, à partir d'une face d'extrémité axialement extérieure jusqu'à une face d'extrémité axialement intérieure.

Selon la direction circonférentielle, une barrette s'étend, selon un sens de rotation préférentiel du pneumatique, à partir d'une face d'attaque jusqu'à une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite.

Une barrette a usuellement, mais pas obligatoirement, un angle d'inclinaison moyen, par rapport à la direction circonférentielle, proche de 45°. En effet, cet angle d'inclinaison moyen permet en particulier un bon compromis entre la traction en champ et le confort vibratoire. La traction en champ est d'autant meilleure que la barrette est axiale, c'est-à-dire que son angle d'inclinaison moyen, par rapport à la direction circonférentielle, est proche de 90°, alors que le confort vibratoire est d'autant meilleur que la barrette est circonférentielle, c'est-à-dire que son angle d'inclinaison moyen, par rapport à la direction circonférentielle, est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement axiale à l'épaule et sensiblement circonférentielle au milieu de la bande de roulement.

La bande de roulement d'un pneumatique pour tracteur agricole comprend généralement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Une tendance actuellement forte dans la définition des engins agricoles de type tracteur est d'intégrer au fonctionnement de ces engins un système dynamique de gestion de la pression interne des pneumatiques. En effet, les engins agricoles de type tracteur travaillent en général selon deux modes de fonctionnement distincts: un travail sur sol agricole généralement meuble et un transport sur route ou chemin sur sol dur.

Dans le cas d'un travail sur sol agricole, il est important de gonfler les enveloppes à la pression la plus basse possible compatible avec l'endurance du pneumatique. En effet, il est connu que plus la pression interne du pneumatique est élevée, plus le tassement des sols au passage du tracteur sera important : ce qui pénalisera le rendement agronomique des cultures ultérieures. De plus, la résistance à l'avancement du véhicule sera d'autant plus faible que la pression du pneumatique est plus faible du fait de la diminution de l'orniérage.

Dans le cas du transport sur route ou chemin sur sol dur, ayant pour fonction soit de véhiculer le tracteur sur la zone de travail, soit de transporter les produits entrants ou sortants de l'exploitation agricole, une basse pression est pénalisante, tant du point de vue du comportement routier que de la résistance au roulement

Dans un mode de fonctionnement à pression régulée au cours de l'usage, on alternera donc un fonctionnement en champ, à basse pression, et sur route, à haute pression. Il est connu qu'à haute pression, l'aire de contact du pneumatique avec le sol est plutôt étroite et la charge est reprise essentiellement par le centre de la bande de roulement tandis qu'à basse pression , l'aire de contact du pneumatique avec le sol est large et la charge est reprise essentiellement par les bords de la bande de roulement ou épaule. On alterne donc :
- un usage routier à haute pression sollicitant le centre de la bande de roulement sur un sol de type routier peu agressif, pour lequel la performance essentielle attendue de la gomme en contact avec le sol est la résistance à l'usure
- un usage en champ à basse pression sollicitant l'extérieur de la bande de roulement sur un sol de type meuble potentiellement agressif, en raison de la présence de cailloux ou de roches, pour lequel la performance essentielle attendue de la gomme en contact avec le sol est la résistance à l'agression mécanique.

Les inventeurs se sont donnés pour objectif d'améliorer le compromis entre la résistance à l'usure, au centre de la bande de roulement, en usage routier, et la résistance aux agressions mécaniques, aux épaules de la bande de roulement, en usage en champ.

Ce but a été atteint selon l'invention par un pneumatique pour véhicule à usage agricole comprenant:
- une bande de roulement, destinée à entrer en contact avec un sol, et ayant une largeur axiale L mesurée entre deux extrémités axiales,
- la bande de roulement comprenant des barrettes séparées les unes des autres par des sillons,
- chaque barrette s'étendant radialement vers l'extérieur, sur une hauteur radiale H, à partir d'une surface de fond jusqu'à une face de contact,
- les sillons étant constitués par les portions de la surface de fond séparant les barrettes,
- la bande de roulement comprenant une première portion médiane ayant une largeur axiale L₁, au moins égale à 0.25 fois et au plus égale à 0.75 fois la largeur axiale L, et des deuxième et troisième portions latérales, s'étendant respectivement axialement vers l'extérieur, à partir de la première portion médiane jusqu'à une extrémité axiale, et ayant des largeurs axiales respectives (L₂, L₃),
- chaque portion de barrette, axialement comprise dans la première portion médiane et s'étendant radialement vers l'intérieur, à partir de la face de contact jusqu'à une première interface, sur une distance radiale D₁ au moins égale à 0.5 fois et au plus égale à 1 fois la hauteur radiale H de barrette, étant constituée par un premier mélange élastomérique
- et chaque portion de barrette, axialement comprise dans une des deuxième ou troisième portions latérales et s'étendant radialement vers l'intérieur, à partir de la face de contact jusqu'à une deuxième interface, sur une distance radiale D₂ au moins égale à 0.5 fois et au plus égale à 1 fois la hauteur radiale H de barrette, étant constituée par un deuxième mélange élastomérique.

L'invention vise à obtenir une différenciation des performances de la bande de roulement entre une première portion médiane constituée au moins en partie par un premier mélange élastomérique et destinée à résister à l'usure en usage routier, et des deuxième et troisième portions latérales, constituées au moins en partie par un deuxième mélange élastomérique et destinées résister aux agressions en usage en champ. Par conséquent, les premier et deuxième mélanges élastomériques sont essentiellement différents.

La première portion médiane est une portion de bande de roulement s'étendant axialement de part et d'autre du plan équatorial du pneumatique, et, le plus souvent mais pas exclusivement, symétrique par rapport au plan équatorial du pneumatique. Les deuxième et troisième portions latérales sont les portions de bande de roulement, s'étendant axialement de part et d'autre de la première portion médiane, à partir de la première portion médiane jusqu'à une extrémité axiale de la bande de roulement.

Selon l'invention, la bande de roulement étant définie géométriquement par sa largeur axiale L, qui est la distance axiale séparant ses deux extrémités axiales, la première portion médiane a une largeur axiale L₁ au moins égale à 0.25 fois et au plus égale à 0.75 fois la largeur axiale totale L de la bande de roulement. Dans le cas le plus fréquent d'une première portion médiane symétrique par rapport au plan équatorial du pneumatique, les largeurs axiales respectives L₂ et L₃ des deuxième et troisième portions latérales sont égales entre elles et sont au moins égales à 0.125 fois et au plus égales à 0.375 fois la largeur axiale totale L de la bande de roulement.

Encore selon l'invention, chaque portion de barrette, axialement comprise dans la première portion médiane et s'étendant radialement vers l'intérieur, à partir de la face de contact jusqu'à une première interface, sur une distance radiale D₁ au moins égale à 0.5 fois et au plus égale à 1 fois la hauteur radiale H de barrette, est constituée par un premier mélange élastomérique. La hauteur radiale H de barrette est mesurée sur le pneumatique neuf, c'est-à-dire non usé. Le premier mélange élastomérique s'étend radialement sur la distance radiale D₁ précédemment définie et axialement depuis une première extrémité axiale de la portion médiane jusqu'à une deuxième extrémité axiale de la portion médiane.

La première portion médiane étant la portion de bande de roulement principalement soumise à usure, en usage routier, toutes les portions de bandelettes, axialement positionnées dans cette première portion médiane, sont avantageusement constituées d'un premier mélange élastomérique résistant à l'usure. En outre, les inventeurs ont montré que, selon la direction radiale, une portion de barrette, dont la hauteur radiale est comprise entre 0.5 fois et 1 fois la hauteur radiale H de barrette, c'est-à-dire représentant 50% à 100% de la hauteur radiale H de barrette, à partir de la face de contact, et constituée par un tel premier mélange élastomérique, apporte une contribution significative à la performance en usure, en usage routier.

Egalement selon l'invention, chaque portion de barrette, axialement comprise dans une des deuxième ou troisième portions latérales et s'étendant radialement vers l'intérieur, à partir de la face de contact jusqu'à une deuxième, sur une distance radiale D₂ au moins égale à 0.5 fois et au plus égale à 1 fois la hauteur radiale H de barrette, est constituée par un deuxième mélange élastomérique. La hauteur radiale H de barrette est mesurée sur le pneumatique neuf, c'est-à-dire non usé. Le deuxième mélange élastomérique s'étend radialement sur la distance radiale D₂ précédemment définie et axialement depuis une première extrémité axiale de chaque portion latérale jusqu'à une deuxième extrémité axiale de ladite portion latérale.

Les deuxième et troisième portions latérales étant les portions de bande de roulement principalement soumises aux agressions, en usage en champ, toutes les portions de bandelettes, axialement positionnées dans une des deuxième ou troisième portions latérales, sont avantageusement constituées d'un deuxième mélange élastomérique résistant aux agressions. En outre, les inventeurs ont montré que, selon la direction radiale, une portion de barrette, dont la hauteur radiale est comprise entre 0.5 fois et 1 fois la hauteur radiale H de barrette, c'est-à-dire représentant 50% à 100% de la hauteur radiale H de barrette, à partir de la face de contact, et constituée par un tel deuxième mélange élastomérique, apporte une contribution significative à la résistance aux agressions, en usage en champ.

Il est à noter que la hauteur radiale d'une portion de barrette, axialement positionnée dans une des deuxième ou troisième portions latérales et constituée par le deuxième mélange élastomérique, n'est pas nécessairement égale à la hauteur radiale d'une portion de barrette, axialement positionnée dans la première portion médiane latérales et constituée par le premier mélange élastomérique.

Selon un premier mode de réalisation avantageux, chaque portion de barrette, axialement comprise dans la première portion médiane et s'étendant radialement vers l'intérieur, à partir de la première interface jusqu'à une troisième interface, positionnée radialement à l'intérieur à la surface de fond à une distance radiale D₃ au moins égale à 3 mm, est constituée par le premier mélange élastomérique.

En d'autres termes, le premier mélange élastomérique s'étend radialement vers l'intérieur, à partir de la face de contact de toute portion de barrette axialement positionnée dans la première portion médiane, non seulement sur toute la hauteur radiale H de barrette, mais aussi sur une portion de pneumatique s'étendant radialement vers l'intérieur, à partir de la surface de fond jusqu'à une troisième interface positionnée radialement à l'intérieur de la surface de fond à une distance D₃ au moins égale à 3 mm. La portion de pneumatique comprise entre la surface de fond et la troisième interface est usuellement appelée sous-creux. Son rôle est de protéger l'armature de sommet du pneumatique radialement intérieure à la bande de roulement vis-à-vis des agressions mécaniques et physico-chimiques. La distance radiale entre la surface de fond et la troisième interface définit l'épaisseur du sous-creux, qui est une caractéristique importante vis-à-vis de la protection de l'armature de sommet du pneumatique. Une épaisseur de sous-creux minimale garantit la résistance à l'usure dans la première portion médiane jusqu'à l'usure complète des barrettes, voire au-delà, c'est-à-dire lorsque le sous-creux est lui-même partiellement usé.

Selon un deuxième mode de réalisation avantageux, chaque portion de barrette, axialement comprise dans une des deuxième ou troisième portions latérales et s'étendant radialement vers l'intérieur, à partir de la deuxième interface jusqu'à une troisième interface , positionnée radialement à l'intérieur à la surface de fond (5) à une distance radiale D₃ au moins égale à 3 mm, est constituée par le deuxième mélange élastomérique.

En d'autres termes, le deuxième mélange élastomérique s'étend radialement vers l'intérieur, à partir de la face de contact de toute portion de barrette axialement positionnée dans une des deuxième ou troisième portions latérales, non seulement sur toute la hauteur radiale H de barrette, mais aussi sur le sous-creux de pneumatique s'étendant radialement vers l'intérieur, à partir de la surface de fond jusqu'à une troisième interface positionnée radialement à l'intérieur de la surface de fond à une distance D₃ au moins égale à 3 mm. Une épaisseur de sous-creux minimale garantit la résistance aux agressions dans les deuxième et troisième portions latérales jusqu'à l'usure complète des barrettes, voire au-delà, c'est-à-dire lorsque le sous-creux est lui-même partiellement usé.

Avantageusement, la distance radiale D₃ entre la surface de fond et la deuxième interface est au plus égale à 15 mm. En d'autres termes, l'épaisseur du sous-creux a une limite supérieure égale à 15 mm, correspondant à l'épaisseur maximale au-delà de laquelle le niveau thermique dans le sommet devient trop important. Cette limite supérieure garantit ainsi une endurance satisfaisante du sommet vis-à-vis du niveau thermique.

Le plus souvent, la distance radiale D₁, entre la face de contact et la première interface, et la distance radiale D₂, entre la face de contact et la deuxième interface, sont égales. En d'autres termes, la hauteur radiale d'une portion de barrette, axialement positionnée dans la première portion médiane latérales et constituée par le premier mélange élastomérique est égale à la hauteur radiale d'une portion de barrette, axialement positionnée dans une des deuxième ou troisième portions latérales et constituée par le deuxième mélange élastomérique.

Egalement avantageusement, le premier mélange élastomérique ayant un module complexe de cisaillement dynamique G₁* à 50% de déformation et à 60°C, le module complexe de cisaillement dynamique G₁* du premier mélange élastomérique est au moins égal à 1.4 MPa et, de préférence, au plus égal à 2 MPA. Un module complexe de cisaillement dynamique G₁* à 50% de déformation et à 60°C, compris dans un tel intervalle de valeurs, confère au premier mélange élastomérique des propriétés de cohésion favorables pour limiter l'usure en usage routier.

Encore avantageusement, le premier mélange élastomérique ayant un facteur de perte tan (δ₁) à 60°C, le facteur de perte tan (δ₁) du premier mélange élastomérique est au moins égal à 0.22 et au plus égal à 0.30. Un facteur de perte tan (δ₁), compris dans un tel intervalle de valeurs, permet de limiter la dissipation d'énergie et donc le niveau thermique.

De façon générale, le module complexe G* et le facteur de perte tan (δ) d'un mélange élastomérique sont des propriétés dites dynamiques. Ils sont mesurés sur un visco-analyseur, connu sous le nom « Metravib VA4000 », selon la norme ASTM D 5992-96. On enregistre la réponse d'un échantillon du mélange élastomérique vulcanisé, sous la forme d'une éprouvette cylindrique de 4 mm d'épaisseur et de 400 mm² de section, soumis à une sollicitation sinusoïdale en cisaillement simple alterné, à la fréquence de 10Hz, à une température donnée, par exemple de 60°C. On effectue un balayage en amplitude de déformation de 0,1% à 50%, selon un cycle aller, puis de 50% à 1%, selon un cycle retour. Les résultats exploités sont en particulier le module complexe de cisaillement dynamique G* et le facteur de perte tan (δ). Pour le cycle retour, on indique la valeur maximale de tan (δ) observée, noté tan (δ)ₘₐₓ.

Du point de vue de la composition chimique, le premier mélange élastomérique, constituant au moins en partie les portions de barrette de la première portion médiane, comprend des élastomères diéniques, des charges renforçantes et un système de réticulation. Les élastomères diéniques classiquement utilisés sont choisis dans le groupe constitué par les polybutadiènes (BR), le caoutchouc naturel (NR), les polyisoprènes de synthèse (PI) et les copolymères styrène-butadiène (SBR). Préférentiellement, les élastomères sont utilisés sous forme de coupages NR/BR ou SBR/BR, voire de coupages NR/BR/SBR. Préférentiellement les SBR utilisés présentent des températures de transition vitreuse ou Tg dynamiques inférieures à -45°C, mesurées sur un visco-analyseur connu sous le nom « Metravib VA4000 », selon la norme ASTM D 5992-96. En ce qui concerne la charge renforçante, le premier mélange élastomérique comprend au moins un noir de carbone, tel qu'un noir de carbone des séries 200 et 100 (grades ASTM), ce noir ayant une surface spécifique BET supérieure à 100 m²/g et étant employé à un taux compris entre 50 et 75 pce.

Le premier mélange élastomérique, comprenant les élastomères ou coupages d'élastomères ainsi que les noirs de carbone cités précédemment, présente des propriétés satisfaisantes en termes de résistance à l'usure en usage routier.

Avantageusement, le deuxième mélange élastomérique ayant un module complexe de cisaillement dynamique G₂* à 50% de déformation et à 60°C, le module complexe de cisaillement dynamique G₂* du deuxième mélange élastomérique est au moins égal à 1.3 MPa et, de préférence, au plus égal à 1.9 MPA. Un module complexe de cisaillement dynamique G₂^{*} à 50% de déformation et à 60°C du deuxième mélange élastomérique, compris dans un intervalle de valeurs, confère au deuxième mélange élastomérique des niveaux de rigidités favorables pour la résistance aux agressions, en usage en champ.

Encore avantageusement, le deuxième mélange élastomérique ayant un facteur de perte tan (δ₂) à 60°C, le facteur de perte tan (δ₂) du deuxième mélange élastomérique est au moins égal à 0.24 et au plus égal à 0.32. Un facteur de perte tan (δ₂), compris dans un tel intervalle de valeurs, permet de limiter la dissipation d'énergie et donc le niveau thermique.

Du point de vue de la composition chimique, le deuxième mélange élastomérique, constituant au moins en partie les portions de barrette des deuxième et troisième portions latérales, comprend des élastomères diéniques, des charges renforçantes et un système de réticulation. Les élastomères diéniques classiquement utilisés sont choisis préférentiellement dans le groupe constitué par le caoutchouc naturel (NR), les polyisoprènes de synthèse (PI) et les copolymères styrène-butadiène (SBR). Préférentiellement, les élastomères sont utilisés sous forme de coupages NR/SBR ou SBR/SBR. Préférentiellement les SBR utilisés seuls ou en coupage présentent des températures de transition vitreuse ou Tg dynamiques comprises entre - 50°C et -20°C, mesurées sur un visco-analyseur connu sous le nom « Metravib VA4000 », selon la norme ASTM D 5992-96. En ce qui concerne la charge renforçante, le deuxième mélange élastomérique comprend au moins un noir de carbone, tel qu'un noir de carbone des série 300, 200 et 100 (grades ASTM), ce noir ayant une surface spécifique BET inférieure à 80 m²/g et étant employé à un taux compris entre 50 et 75 pce.

En ce qui concerne la faisabilité industrielle, un pneumatique selon l'invention, et plus précisément de la bande de roulement d'un tel pneumatique, peut être fabriqué selon un procédé tel que décrit et revendiqué par le document WO 2009131578. L'invention, décrite et revendiquée par le document WO 2009131578, se rapporte à des procédés et à un appareil de formation d'un composant de pneumatique multicouche, les étapes du procédé consistant à :
- utiliser un système mécanique, le système comprenant une pluralité d'éléments de coupe ;
- déplacer une feuille de matériau le long d'un chemin de déplacement à travers le système mécanique;
- couper une première bande de la feuille au moyen d'un ou de plusieurs éléments de la pluralité d'éléments de coupe, cette étape se produisant au cours de l'étape de déplacement;
- appliquer mécaniquement la première bande à une surface de construction, cette étape se produisant au cours de l'étape de déplacement;
- couper une seconde bande de la feuille après l'étape de coupe de la première bande, cette étape se produisant au cours de l'étape de déplacement;
- appliquer mécaniquement la seconde bande à une surface de construction, cette étape se produisant au cours de l'étape de déplacement.

Des modes de réalisation spécifiques du procédé précédemment décrit, relatif à une fabrication multicouche de la bande de roulement, ont été également décrits par les documents WO 2013176675 et WO 2013176676.

La présente invention sera mieux comprise à l'aide des figures 1 à 3, schématiques et non représentées à l'échelle, jointes en annexe :
- figure 1 : vue en perspective d'un pneumatique pour véhicule à usage agricole,
- figure 2 : vue, selon une direction radiale (Z), de la bande de roulement d'un pneumatique pour véhicule à usage agricole,
- figure 3: vue en coupe, selon un plan méridien (YZ), d'une portion de bande de roulement d'un pneumatique selon l'invention.

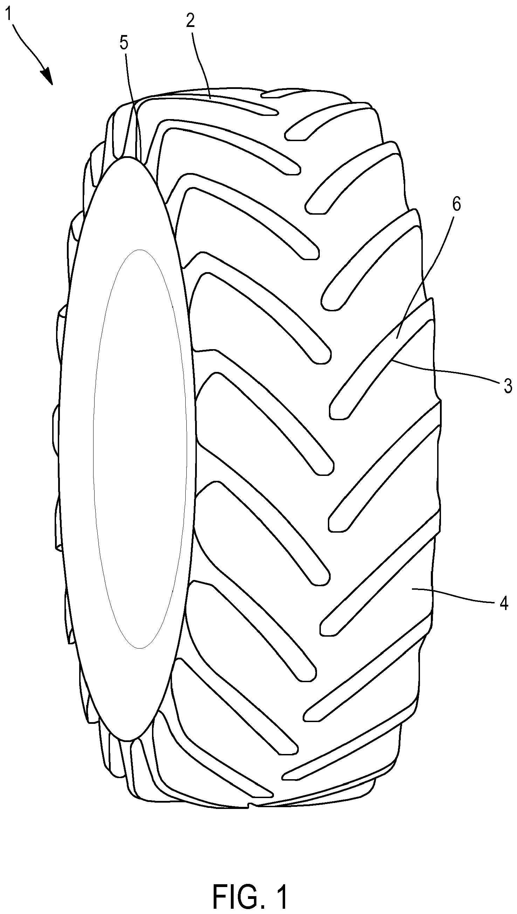

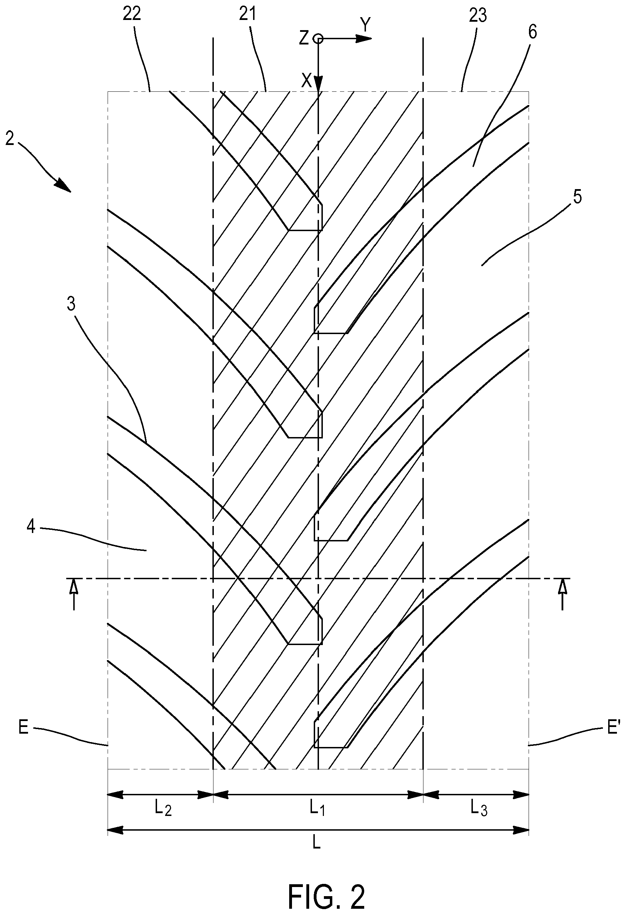

Les figures 1 et 2 présentent respectivement une vue en perspective d'un pneumatique 1 pour véhicule à usage agricole, et une vue, selon une direction radiale Z, de la bande de roulement d'un tel pneumatique. La bande de roulement 2, destinée à entrer en contact avec un sol par l'intermédiaire d'une surface de roulement, comprend des barrettes 3 séparées les unes des autres par des sillons 4. Chaque barrette 3 s'étend radialement vers l'extérieur, à partir d'une surface de fond 5 jusqu'à une face de contact 6, positionnée dans la surface de roulement. Les sillons 4 sont constitués par les portions de la surface de fond 5 séparant les barrettes 3.

Sur la figure 2, la bande de roulement 2 a une largeur axiale L mesurée entre deux extrémités axiales (E, E'). Elle comprend une première portion médiane 21 (hachurée) ayant une largeur axiale L₁, au moins égale à 0.25 fois et au plus égale à 0.75 fois la largeur axiale L, et des deuxième et troisième portions latérales (22, 23), s'étendant respectivement axialement vers l'extérieur, à partir de la première portion médiane 21 jusqu'à une extrémité axiale (E, E'), et ayant des largeurs axiales respectives (L₂, L₃). Dans le cas présenté , la largeur axiale L₁ de la portion médiane 21 de la bande de roulement 2 est égale à 0.5 fois la largeur axiale L de la bande de roulement, et les largeurs axiales respectives (L₂, L₃) des deuxième et troisième portions latérales sont égales entre elles et respectivement égales à 0.25 fois la largeur axiale L de la bande de roulement 2. Conformément à l'invention, les portions de barrettes 3, axialement positionnées dans la première portion médiane 21, sont constituées, sur au moins une partie de leur hauteur radiale H, par un premier mélange élastomérique, alors que les portions de barrettes 3, axialement positionnées dans une des deuxième ou troisième portions latérales (22, 23), sont constituées, sur au moins une partie de leur hauteur radiale H, par un deuxième mélange élastomérique.

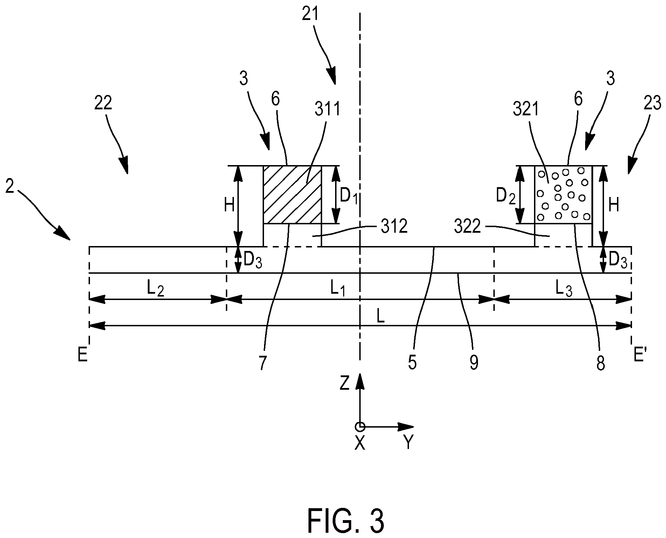

La figure 3 présente une vue en coupe, selon un plan méridien (YZ), de la bande de roulement 2 d'un pneumatique selon un mode de réalisation particulier de l'invention. La bande de roulement 2, ayant une largeur axiale L mesurée entre deux extrémités axiales (E, E'), comprend une première portion médiane 21 ayant une largeur axiale L₁ égale, dans le cas représenté, à 0.5 fois la largeur axiale L, et des deuxième et troisième portions latérales (22, 23), s'étendant respectivement axialement vers l'extérieur, à partir de la première portion médiane 21 jusqu'à une extrémité axiale (E, E'), et ayant des largeurs axiales respectives (L₂, L₃) égales entre elles et respectivement égales à 0.25 fois la largeur axiale L. Dans la première portion médiane 21, une portion 311 de barrette, constituée par un premier mélange élastomérique (hachuré) résistant à l'usure en usage routier, s'étend radialement vers l'intérieur, à partir de la face de contact 6 jusqu'à une première interface 7, sur une distance radiale D₁ au moins égale 0.5 fois et au plus égale à 1 fois la hauteur radiale H de barrette. Dans la troisième portion latérale 23, une portion 321 de barrette, constituée par un deuxième mélange élastomérique (en pointillés) résistant aux agressions en usage en champ, s'étend radialement vers l'intérieur, à partir de la face de contact 6 jusqu'à une deuxième interface 8, sur une distance radiale D₂ au moins égale 0.5 fois et au plus égale à 1 fois la hauteur radiale H de barrette. La portion de pneumatique comprise entre la surface de fond 5 et une troisième interface 9, radialement intérieure à la surface de fond 5 à une distance radiale D3, constitue le sous-creux. Dans le cas représenté, un troisième mélange élastomérique, différent des premier et deuxième mélanges élastomériques, s'étend radialement vers l'intérieur, à partir des première et deuxième interfaces (7, 8) jusqu'à la troisième interface 9.

L'invention a été plus particulièrement étudiée pour un pneumatique agricole, dans lequel le premier mélange élastomérique a un module complexe de cisaillement dynamique G₁* égal à 1.72 MPa et un facteur de perte tan (δ₁) égal à 0.30, et le deuxième mélange élastomérique a un module complexe de cisaillement dynamique G₂* égal à 1.47 MPa et un facteur de perte tan (δ₂) égal à 0.32.

Les premier et deuxième mélanges élastomériques peuvent avoir des compositions chimiques différentes de celles précédemment décrites, selon les performances recherchées pour le pneumatique.

L'invention est, plus généralement, applicable à tout pneumatique dont la bande de roulement comprend des éléments en relief et susceptible de rouler sur des sols comprenant des indenteurs agressifs, tel qu'un pneumatique pour véhicule de génie civil.

## Revendications

1. Pneumatique (1) pour véhicule à usage agricole comprenant:
- une bande de roulement (2), destinée à entrer en contact avec un sol, et ayant une largeur axiale L mesurée entre deux extrémités axiales (E, E'),
- la bande de roulement (2) comprenant des barrettes (3) séparées les unes des autres par des sillons (4),
- chaque barrette (3) s'étendant radialement vers l'extérieur, sur une hauteur radiale H, à partir d'une surface de fond (5) jusqu'à une face de contact (6),
- les sillons (4) étant constitués par les portions de la surface de fond (5) séparant les barrettes (3),
**caractérisé en ce que** la bande de roulement (2) comprend une première portion médiane (21) ayant une largeur axiale L₁, au moins égale à 0.25 fois et au plus égale à 0.75 fois la largeur axiale L, et des deuxième et troisième portions latérales (22, 23), s'étendant respectivement axialement vers l'extérieur, à partir de la première portion médiane (21) jusqu'à une extrémité axiale (E, E'), et ayant des largeurs axiales respectives (L₂, L₃), **en ce que** chaque portion de barrette (311), axialement comprise dans la première portion médiane (21) et s'étendant radialement vers l'intérieur, à partir de la face de contact (6) jusqu'à une première interface (7), sur une distance radiale D₁ au moins égale à 0.5 fois et au plus égale à 1 fois la hauteur radiale H de barrette, est constituée par un premier mélange élastomérique ayant un module complexe de cisaillement dynamique G₁* à 50% de déformation et à 60°C au moins égal à 1.4 MPa et, de préférence, au plus égal à 2 MPA, **et en ce que** chaque portion de barrette (321), axialement comprise dans une des deuxième ou troisième portions latérales (22, 23) et s'étendant radialement vers l'intérieur, à partir de la face de contact (6) jusqu'à une deuxième interface (8), sur une distance radiale D₂ au moins égale à 0.5 fois et au plus égale à 1 fois la hauteur radiale H de barrette, est constituée par un deuxième mélange élastomérique ayant un module complexe de cisaillement dynamique G₂* à 50% de déformation et à 60°C au moins égal à 1.3 MPa et, de préférence, au plus égal à 1.9 MPA;
les modules complexes de cisaillement dynamiques sont mesurés selon la norme ASTM D 5992-96.

2. Pneumatique (1) selon la revendication 1, **dans lequel** chaque portion de barrette (312), axialement comprise dans la première portion médiane (21) et s'étendant radialement vers l'intérieur, à partir de la première interface (7) jusqu'à une troisième interface (9), positionnée radialement à l'intérieur à la surface de fond (5) à une distance radiale D₃ au moins égale à 3 mm, est constituée par le premier mélange élastomérique.

3. Pneumatique (1) selon l'une des revendications 1 ou 2, **dans lequel** chaque portion de barrette (322), axialement comprise dans une des deuxième ou troisième portions latérales (22, 23) et s'étendant radialement vers l'intérieur, à partir de la deuxième interface (8) jusqu'à une troisième interface (9), positionnée radialement à l'intérieur à la surface de fond (5) à une distance radiale D₃ au moins égale à 3 mm, est constituée par le deuxième mélange élastomérique.

4. Pneumatique (1) selon l'une des revendications 2 ou 3, **dans lequel** la distance radiale D₃ entre la surface de fond (5) et la troisième interface (9) est au plus égale à 15 mm.

5. Pneumatique (1) l'une quelconque des revendications 1 à 4, **dans lequel** la distance radiale D₁, entre la face de contact (6) et la première interface (7), et la distance radiale D₂, entre la face de contact (6) et la deuxième interface (7), sont égales.

6. Pneumatique (1) selon l'une quelconque des revendications 1 à 5, le premier mélange élastomérique ayant un facteur de perte tan (δ₁) à 60°C, **dans lequel** le facteur de perte tan (δ₁) du premier mélange élastomérique est au moins égal à 0.22 et au plus égal à 0.30.

7. Pneumatique (1) selon l'une quelconque des revendications 1 à 6, le deuxième mélange élastomérique ayant un facteur de perte tan (δ₂) à 60°C, **dans lequel** le facteur de perte tan (δ₂) du deuxième mélange élastomérique est au moins égal à 0.24 et au plus égal à 0.32.

## Patentansprüche

1. Reifen (1) für ein landwirtschaftliches Fahrzeug, der Folgendes beinhaltet:
- eine Lauffläche (2), die dazu bestimmt ist, mit einem Boden in Kontakt zu kommen, und die eine axiale, zwischen zwei axialen Enden (E, E') gemessene Breite L aufweist,
- wobei die Lauffläche (2) Stollen (3) beinhaltet, die durch Rillen (4) voneinander getrennt sind,
- wobei sich jeder Stollen (3) von einer Grundfläche (5) bis zu einer Kontaktfläche (6) über eine radiale Höhe H radial nach außen erstreckt,
- wobei die Rillen (4) aus den Abschnitten der Grundfläche (5) bestehen, die die Stollen (3) trennen, **dadurch gekennzeichnet, dass** die Lauffläche (2) einen ersten mittleren Abschnitt (21), der eine axiale Breite L₁ von mindestens gleich dem 0,25-fachen und höchstens gleich dem 0,75-fachen der axialen Breite L aufweist, und einen zweiten und dritten Seitenabschnitt (22, 23), die sich von dem ersten mittleren Abschnitt (21) jeweils bis zu einem axialen Ende (E, E') axial nach außen erstrecken und eine jeweilige axiale Breite (L₂, L₃) aufweisen, beinhaltet, **dass** jeder Stollenabschnitt (311), der in dem ersten mittleren Abschnitt (21) axial enthalten ist und sich über einen radialen Abstand D₁ von mindestens gleich dem 0,5-fachen und höchstens gleich dem 1-fachen der radialen Stollenhöhe H von der Kontaktfläche (6) bis zu einer ersten Schnittstelle (7) radial nach innen erstreckt, aus einer ersten elastomeren Mischung besteht, die einen komplexen dynamischen Schubmodul G₁* bei 50 % Verformung und bei 60 °C von mindestens gleich 1,4 MPa und vorzugsweise von höchstens gleich 2 MPA aufweist, **und dass** jeder Stollenabschnitt (321), der in einem des zweiten oder dritten Seitenabschnitts (22, 23) axial enthalten ist und sich über einen radialen Abstand D₂ von mindestens gleich dem 0,5-fachen und höchstens gleich dem 1-fachen der radialen Stollenhöhe H von der Kontaktfläche (6) bis zu einer zweiten Schnittstelle (8) radial nach innen erstreckt, aus einer zweiten elastomeren Mischung besteht, die einen komplexen dynamischen Schubmodul G₂* bei 50 % Verformung und bei 60 °C von mindestens gleich 1,3 MPa und vorzugsweise von höchstens gleich 1,9 MPA aufweist;
wobei die komplexen dynamischen Schubmodule gemäß der Norm ASTM D 5992-96 gemessen werden.

2. Reifen (1) nach Anspruch 1, **wobei** jeder Stollenabschnitt (312), der in dem ersten mittleren Abschnitt (21) axial enthalten ist und sich von der ersten Schnittstelle (7) bis zu einer dritten Schnittstelle (9), die mit einem radialen Abstand D₃ von mindestens gleich 3 mm von der Grundfläche (5) radial nach innen positioniert ist, radial nach innen erstreckt, aus der ersten elastomeren Mischung besteht.

3. Reifen (1) nach einem der Ansprüche 1 oder 2, **wobei** jeder Stollenabschnitt (322), der in einem von dem zweiten oder dritten Seitenabschnitt (22, 23) axial enthalten ist und sich von der zweiten Schnittstelle (8) bis zu einer dritten Schnittstelle (9), die mit einem radialen Abstand D₃ von mindestens gleich 3 mm von der Grundfläche (5) radial nach innen positioniert ist, radial nach innen erstreckt, aus der zweiten elastomeren Mischung besteht.

4. Reifen (1) nach einem der Ansprüche 2 oder 3, **wobei** der radiale Abstand D₃ zwischen der Grundfläche (5) und der dritten Schnittstelle (9) höchstens gleich 15 mm ist.

5. Reifen (1) nach einem der Ansprüche 1 bis 4, **wobei** der radiale Abstand D₁ zwischen der Kontaktfläche (6) und der ersten Schnittstelle (7) und der radiale Abstand D₂ zwischen der Kontaktfläche (6) und der zweiten Schnittstelle (7) gleich sind.

6. Reifen (1) nach einem der Ansprüche 1 bis 5, wobei die erste elastomere Mischung einen Verlustfaktor tan (δ₁) bei 60 °C aufweist, **wobei** der Verlustfaktor tan (δ₁) der ersten elastomeren Mischung mindestens gleich 0,22 und höchstens gleich 0,30 ist.

7. Reifen (1) nach einem der Ansprüche 1 bis 6, wobei die zweite elastomere Mischung einen Verlustfaktor tan (δ₂) bei 60 °C aufweist, **wobei** der Verlustfaktor tan (δ₂) der zweiten elastomeren Mischung mindestens gleich 0,24 und höchstens gleich 0,32 ist.

## Claims

1. Tyre (1) for an agricultural vehicle, comprising:
- a tread (2) that is intended to come into contact with the ground and has an axial width L measured between two axial ends (E, E'),
- the tread (2) comprising lugs (3) that are separated from one another by grooves (4),
- each lug (3) extending radially outwards, over a radial height H, from a bottom surface (5) as far as a contact face (6),
- the grooves (4) consisting of the portions of the bottom surface (5) separating the lugs (3), **characterized in that** the tread (2) comprises a first, median portion (21) having an axial width L₁ at least equal to 0.25 times and at most equal to 0.75 times the axial width L, and second and third, lateral portions (22, 23) that respectively extend axially outwards from the first, median portion (21) as far as an axial end (E, E') and have respective axial widths (L₂, L₃), **in that** each lug portion (311) that is axially contained in the first, median portion (21) and extends radially inwards, from the contact face (6) as far as a first interface (7), over a radial distance D₁ at least equal to 0.5 times and at most equal to 1 times the radial lug height H, consists of a first elastomeric compound having a complex dynamic shear modulus G₁* at 50% deformation and at 60°C at least equal to 1.4 MPa, and preferably at most equal to 2 MPa, **and in that** each lug portion (321) that is axially contained in one of the second or third, lateral portions (22, 23) and extends radially inwards, from the contact face (6) as far as a second interface (8), over a radial distance D₂ at least equal to 0.5 times and at most equal to 1 times the radial lug height H, consists of a second elastomeric compound having a complex dynamic shear modulus G₂* at 50% deformation and at 60°C at least equal to 1.3 MPa, and preferably at most equal to 1.9 MPa, the complex dynamic shear modulus values being measured in accordance with the standard ASTM D 5992-96.

2. Tyre (1) according to Claim 1, **wherein** each lug portion (312) that is axially contained in the first, median portion (21) and extends radially inwards, from the first interface (7) as far as a third interface (9) positioned radially inside the bottom surface (5) at a radial distance D₃ at least equal to 3 mm, consists of the first elastomeric compound.

3. Tyre (1) according to either of Claims 1 and 2, **wherein** each lug portion (322) that is axially contained in one of the second or third, lateral portions (22, 23) and extends radially inwards, from the second interface (8) as far as a third interface (9) positioned radially inside the bottom surface (5) at a radial distance D₃ at least equal to 3 mm, consists of the second elastomeric compound.

4. Tyre (1) according to either of Claims 2 and 3, **wherein** the radial distance D₃ between the bottom surface (5) and the third interface (9) is at most equal to 15 mm.

5. Tyre (1) according to any one of Claims 1 to 4, **wherein** the radial distance D₁ between the contact face (6) and the first interface (7), and the radial distance D₂ between the contact face (6) and the second interface (7) are equal.

6. Tyre (1) according to any one of Claims 1 to 5, the first elastomeric compound having a loss factor tan (δ₁) at 60°C, **wherein** the loss factor tan (δ₁) of the first elastomeric compound is at least equal to 0.22 and at most equal to 0.30.

7. Tyre (1) according to any one of Claims 1 to 6, the second elastomeric compound having a loss factor tan (δ₂) at 60°C, **wherein** the loss factor tan (δ₂) of the second elastomeric compound is at least equal to 0.24 and at most equal to 0.32.
